# EUROPEAN PATENT SPECIFICATION

(11) **EP 0 533 170 B1**
(45) Date of publication and mention of the grant of the patent: **11.06.1997**
(21) Application number: 92115946.3
(22) Date of filing: 17.09.1992
(51) Int. Cl.: C07F 7/08, C07F 7/14, C07F 7/18, C08G 77/38

(54) **Method for controlling hydrosilylation in a reaction mixture**
Verfahren zur Steuerung der Hydrosilylierung in Reaktionsgemische
Procédé de commande d'hydrosilylation dans un mélange de réaction

(30) Priority: 18.09.1991 US 762672
(43) Date of publication of application: 24.03.1993
(73) Proprietor: DOW CORNING CORPORATION, Midland Michigan 48686-0994 (US)
(72) Inventor: Kleyer, Don Lee, Hemlock, Michigan (US); Nguyen, Binh Thanh, Midland, Michigan (US)
(74) Representative: Spott, Gottfried, Dr.

(56) References cited:
- EP-A- 0 032 377
- DE-B- 1 158 071
- US-A- 4 578 497
- JOURNAL OF ORGANOMETALLIC CHEMISTRY vol. 396, 1990, pages 299 - 305 SUZUKI, T. ET AL.
- JOURNAL OF THE AMERICAN CHEMICAL SOCIETY vol. 112, 1990, pages 5998 - 6004 LEWIS, L.N.
- THE JOURNAL OF ORGANIC CHEMISTRY vol. 52, 1987, pages 4118 - 4121 ONOPCHENKO, A. ET AL.
- CHEMICAL ABSTRACTS, vol. 112, 1990, Columbus, Ohio, US; abstract no. 139125u, LEWIS, L.N. page 729 ;
- CHEMICAL ABSTRACTS, vol. 102, 1985, Columbus, Ohio, US; abstract no. 24689g, MILLAN, A. ET AL. page 702 ;
- JOURNAL OF THE CHEMICAL SOCIETY, DALTON 1980, pages 308 - 313 DICKERS, H.M. ET AL.

## Description

One method known in the art for producing organosilicon compounds comprises reacting a silicon hydride containing compound with an unsaturated compound in the presence of a catalyst. This reaction is commonly referred to as hydrosilylation. Typically the catalyst is platinum metal on a support, a platinum compound generally used in an inert solvent or a platinum complex, however, other catalysts comprising rhodium or nickel may be used. In U.S. Patent No. 2,823,218 to Speier et al., a method for the production of organosilicon compounds by reacting a ≡Si-H with a compound containing aliphatic carbon atoms linked by multiple bonds in the presence of a chloroplatinic acid is taught. U.S. Patent No. 3,220,972 to Lamoreaux teaches a similar process however the catalyst is a reaction product of chloroplatinic acid. In EP Patent Application No. 0337197 to Lewis, the catalyst used is a rhodium colloid and the silicon containing reactant must have two to three hydrogen atoms bonded to the silicon.

One of the major problems known in the art with hydrosilylations is the deactivation of the catalyst prior to the completion of the reaction. One method for reactivation of the catalyst has been to expose the reaction mixture to oxygen. For example, U.S. Patent No. 4,578,497 to Onopchenko et al. teaches the use of an oxygenated platinum containing catalyst for hydrosilylation with alkylsilanes, R'RₓSiH₃₋ₓ. The oxygenated platinum catalyst is produced by contacting the catalyst with an oxygen-containing gas. In particular, the catalyst is contacted with the oxygen-containing gas by bubbling air into the catalyst mixed with the olefin and with or without an inert solvent under ambient temperatures prior to the reaction. Another technique taught by Onopchenko is to run the hydrosilylation until deactivation occurs, cool to room temperature and then bubble an oxygen-containing gas into the mixture. Following the exposure to oxygen the system is placed under an inert atmosphere and the reaction is again commenced.

The method taught by Onopchenko has several disadvantages. The introduction of oxygen must always be done at room temperature. Therefore the oxygen must be introduced before starting the reaction. However, if an insufficient amount of oxygen is added then the catalyst may still deactivate, in other words, there is no control over the reaction except to stop and start the reaction. The oxygen can also be introduced once the catalyst has deactivated and the reactants have been cooled to room temperature. This results in inefficient processing and the possibility of a unsafe conditions upon reactivation. Further, Onopchenko requires that the reactants be placed under an inert atmosphere after the exposure of oxygen, once again leading to the possibility of insufficient oxygen being present to sustain the reaction, Finally, Onopchenko does not provide any means for controlling the reaction rate through the use of oxygen, as in his disclosure, the reaction goes or it does not go.

Dickers et al., "Organosilicon Chemistry. Part 24 Homogeneous Rhodium-Catalysed Hydrosilylation of Alkenes and Alkynes: The Role of Oxygen or Hydroperoxides", J. Chem Soc., Dalton Trans. (1980) (2) 308; disclose the use of oxygen to initiate the hydrosilylation of propene, hex-1-ene and hex-1-yne using [RhCl(PPh₃)₃] as the catalyst. The oxygen is necessary when the reagents have been purified.

In Journal of Organometallic Chemistry, Vol. 396, pages 299 to 305 (1990), the effects of oxygen and temperature on a platinum catalyzed hydrosilylation of disilylethynes are disclosed. The authors found that oxygen is needed for a hydrosilylation reaction to take place. Moreover, they found that the concentration of air in the nitrogen atmosphere over the reaction mixture affected the product distribution.

A. Onopchenko et al. found a method for activation of platinum catalysts with oxygen to enhance the hydrosilylation reaction. They reported their results in J. Org. Chem. 1987, 52, pages 4118 to 4121, and claimed their method in the above-mentioned US patent 4 578 497.

Also L. N. Lewis et al. found that the hydrosilylation reaction is catalyzed by platinum with oxygen as cocatalyst. They reported about their results in Chemical Abstracts 1990, Vol. 112, 139125u, and J. Am. Chem. Soc. 1990, 112, pages 5998 to 6004.

Moreover, it was known from DE-B 1 158 071 that γ-aminoisobutyl groups can be introduced in silicon compounds by a hydrosilylation reaction using methallyl chloride and hydrogen halogen silanes and platinum as catalyst.

Finally, in Harrod, J. F. and Chalk, A. J. "Hydrosilation Catalyzed by Group VIII Complexes", Org. Synth. Met. Carbonyls. (1977) (2) 673-704, at pages 682 and 683, there is disclosed the fact that oxygen is a co-catalyst in hydrosilylations and that this is known among people who run hydrosilations on a large scale where deliberate aeration of the reaction may be required to sustain catalytic activity. Chalk and Harrod merely reiterate that oxygen has an impact on hydrosilylation and on page 683, they speculate as to how it does impact hydrosilylation, but they never do disclose the key to controlling hydrosilylation.

Thus, it is an object of this invention to provide a process for controlling hydrosilylation in a reaction mixture by controlling the solution concentration of oxygen relative to any platinum in said reaction mixture.

The instant invention deals with a method of controlling hydrosilylation involving reacting silicon hydrides having 1 to 3 hydrogen atoms attached to the silicon with unsaturated compounds to produce organosilicon compounds. The reaction is catalyzed using a platinum catalyst selected from platinum metal, platinum compounds and platinum complexes. Oxygen is introduced during the reaction to control the reaction rate, among other things.

This invention is directed to a method of controlling hydrosilylation in a reaction mixture comprising
(A) a silicon hydride selected from silicon hydrides having the general formulae:

   (i) RₓSiH₄₋ₓ,

   (ii) R_{y}HᵤSiCl_{4-y-u},

   (iii) R_{z}(R'O)_{4-z-w}SiH_{w}

   and, 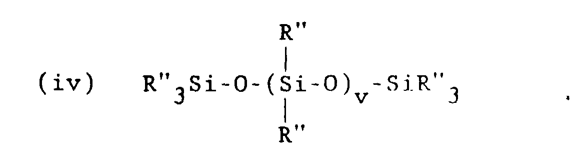 wherein each R is independently selected from the group consisting of substituted and unsubstituted alkyl groups of 1 to 30 carbon atoms and substituted and unsubstituted aryl groups of 6 to 16 carbon atoms; each R'is independently selected from alkyl groups of 1 to 6 carbon atoms; R" is independently selected from the group consisting of R and the hydrogen atom, with the proviso that at least one R" in each molecule is a hydrogen atom; u has a value of 1, 2 or 3 with the proviso that u+y≤3; v has a value of zero or an integer of 1 or greater; w has a value of 1 to 3; x has the value of 1 to 3; y has a value of 0 to 2; and z has a value of 0 to 2 with the proviso that w+z≤3, with
(B) unsaturated compounds selected from the group consisting of
   (i) substituted or unsubstituted unsaturated organic compounds or mixtures thereof,
   (ii) substituted or unsubstituted unsaturated silicon compounds or mixtures thereof and,
   (iii) mixtures of (i) and (ii);
   in the presence of a catalyst selected from the group consisting of (a) platinum metal on a support, (b) platinum compounds and (c) platinum complexes, by controlling the solution concentration of oxygen relative to any platinum in said reaction mixture by a subsurface addition of oxygen, wherein the oxygen is introduced in an inert gas stream such that the reaction is carried out in the continuous presence of oxygen.

The presence of the oxygen during the reaction enhances reaction parameters such as reaction rate and selectivity of addition when the solution concentration of oxygen is controlled relative to any platinum in the reaction mixture.

As noted above, the silicon hydrides useful in the instant invention may be exemplified by compounds or mixtures of compounds of the formulae:

(i) RₓSiH₄₋ₓ,

(ii) R_{y}HᵤSiCl_{4-y-u},

(iii) R_{z}(R'O)_{4-z-w}SiH_{w}

and, 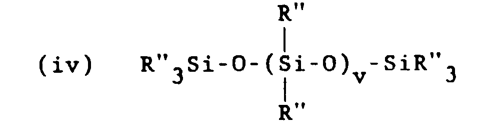 The silicon hydrides useful in the instant invention may be specifically exemplified by, but not limited to, trimethylsilane, dimethylphenylsilane, dimethylsilane methyldimethoxysilane, triethylsilane, triethoxysilane, methyldichlorosilane, dimethylchlorosilane, trimethoxysilane, 1,1,1,2,3,3,3-heptamethyltrisiloxane, dimethylsiloxane/methylhydrogensiloxane methylhydrogencyclic copolymers, siloxanes and others.

The silicon hydride is reacted with unsaturated compounds selected from the group consisting of (i) substituted or unsubstituted unsaturated organic compounds or mixtures thereof, (ii) substituted or unsubstituted unsaturated silicon compounds or mixtures thereof and, (iii) mixtures of (i) and (ii). More specific examples of such groups being cycloalkenyl compounds having 4 to 8 carbon atoms, linear alkenyl compounds having 2 to 30 carbon atoms, branched alkenyl compounds having 4 to 30 carbon atoms and mixtures thereof, and the like. Useful unsaturated compounds include cycloalkenyl compounds such as cyclobutene, cyclopentene, cyclohexene, cycloheptene and cyclooctene and mixtures thereof. Cyclohexene is the preferred olefinically unsaturated cycloalkenyl compound. Other compounds that are useful in this invention are unsaturated linear and branched alkyl compounds which include, but are not limited to those compounds with terminal unsaturation such as 1-hexene and those compounds with internal unsaturation such as trans-2-hexene.

Other compounds such as olefinically unsaturated functional alkenyl compounds which contain halogen, oxygen in the form of acids, anhydrides, alcohols, esters, ethers and nitrogen, may be used in the instant invention.

The halogenated olefinically unsaturated functional alkenyl compounds which may be used herein may be exemplified by compounds such as vinyl chloride, allyl bromide, allyl iodide, allylene bromide, tri- and tetrachloroethylene, tetrafluoroethylene, chloroprene, vinylidene chloride and dichlorostyrene.

Suitable oxygen containing olefinically unsaturated functional alkenyl compounds may be exemplified by ethers such as the allyl and vinyl ethers, alcohols such as allyl alcohol (vinyl carbinol), methylvinylcarbinol and ethynyldimethylcarbinol, acids such as acrylic, methacrylic, vinyl-acetic, oleic, sorbic, linolenic and chaulmoogric and esters such as vinyl acetate, allyl acetate, butenyl acetate, allyl stearate, methylacrylate, ethylcrotonate, diallyl succinate and diallyl phthalate.

Suitable nitrogen containing olefinically unsaturated functional alkenyl compounds may be exemplified by indigo, indole, acrylonitrile and allyl cyanide.

Specifically included within the definition of olefinic unsaturated groups are those olefinic unsaturated groups that are substituted by organofunctional moieties such as CH₂=CHCH₂OC(O)C(CH₃)=CH₂, CH₂=CHCH₂NHCH₂CH₂NH₂, 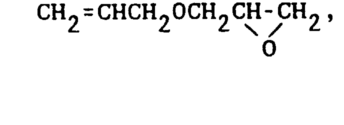 CH₂=CHCH₂SH, CH₂=CHSi{O(CH₂)₂OCH₃}₃, 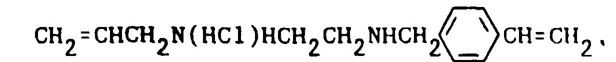 and the like. Unsaturated silicon compounds that are useful in this invention are, for example, (CH₂=CH)ₚSi(OR')₃₋ₚ wherein R' has the same meaning as that set forth above and p has a value of 1 or 2, CH₂=CHCH₂Si(OR')₃ and CH₂=CHCH₂Si(CH₃)(OR')₂ and the like.

The relative amounts of silicon hydride and unsaturated compound employed in the process herein have no technical limitations. One unsaturated linkage, for example, ethylene, is obviously the stoichiometric requirement per silicon bonded hydrogen atom. However, there is no absolute necessity for equivalent amounts of the reactants to be employed and any desired excess of either reactant can be present. In fact, an excess of one reactant, typically the unsaturated compound, may often be desirable to force the reaction to completion or to make the greatest use of the reactant which is the most expensive or most rare. Thus the choice of reactant ratios is mostly a matter of practicality and economics based upon the reactants employed. It is preferred to use a reactant ratio ranging from 1:20 to 20:1 in terms of equivalents of Si-H compound to unsaturated compound, the more usual operating range being in the region of from 1:2 to 2:1.

In some cases, it may be desirable to employ also a solvent for one or both of the reactants. The amount of solvent employed is not critical and can vary without limit except for economic considerations. Any solvent can be employed which will dissolve but be inert toward the desired reactants under the conditions of the reaction and which will not interfere with the reaction. The solvent should also be selected so that easy separation of the products after the reaction can be enhanced.

The platinum catalysts useful in the instant invention may be selected from platinum metal on a support, platinum compounds and platinum complexes. The platinum compounds and platinum complexes may be exemplified by chloroplatinic acid, chloroplatinic acid hexahydrate, Karstedt's catalyst (Pt #2, Pt(ViMe₂SiOSiViMe₂)₂), dichlorobis(triphenylphosphine)platinum (II), cis-dichlorobis(acetonitrile)platinum(II), dicarbonyldichloroplatinum(II), platinum chloride, platinum oxide and others. The platinum metal can be deposited on a support such as charcoal, alumina, zirconia, among others. Any platinum containing material which effects the reaction between the silicon hydride and the unsaturated portion of the unsaturated compound is useful in the instant invention.

Suitable amounts of the platinum containing compounds and the platinum complexes vary within wide limits. Concentrations on the order of 1 mole of catalyst (providing one mole of platinum) per billion moles of unsaturated groups in the unsaturated compound may be useful. Concentrations as high as 1 to 10 moles of catalyst per thousand moles of unsaturated groups in the unsaturated compound may also be employed. Generally, the economics of the reaction dictates the particular level of catalyst employed. Preferable concentrations are from 1 mole of platinum per 1,000 moles of unsaturated groups to 1 mole of platinum per 1,000,000 mole of unsaturated groups in the unsaturated compound. Suitable amounts of supported platinum include, for example, from about 0.1 to about 10 weight percent, preferably from about 0.5 to 5 weight percent based upon elemental platinum.

A further description of platinum catalysts useful in the instant invention is found in, but not limited to, U.S. Patent Nos. 4,578,497, 3,775,452, 3,220,972 and 2,823,218.

The catalyst may be dissolved in a solvent for ease of handling and to facilitate measuring the minute amounts needed. Preferably, the solvent should be inert. Suitable solvents include the various hydrocarbon solvents such as benzene, toluene, xylene and mineral spirits and polar solvents such as alcohols, various glycols and esters.

The reaction temperature can vary over an extremely wide range. The optimum temperature depends upon the concentration of catalyst present, concentration of oxygen and the nature of the reactants. Best results are obtained by initiating the reaction at about 20° to 180°C. and maintaining the reaction within reasonable limits of this range. The reaction is typically exothermic and the reaction temperature can be maintained by controlling the rate of addition of one of the reactants or applying cooling means to the reaction vessel. It is preferred to use an operating temperature such that the reaction is carried out under reflux conditions.

The reaction can be carried out at atmospheric, subatmospheric or superatmospheric pressures. The choice of conditions is largely a matter of choice based on the nature of the reactants and the equipment available. Non-volatile reactants are especially adaptable to being heated at atmospheric pressure. It may be preferred to run the reaction at pressures above atmospheric to reduce the volatility of the reactants at higher temperatures.

The amount of time for the reaction to go to completion depends upon the reactants, reaction temperature, catalyst concentration and oxygen concentration. Determination of when the reaction has gone to completion can be accomplished by simple analytical methods such as gas liquid chromatography or by infrared spectometry.

The reaction may be run on a continuous, semi-continuous or batch reactor. A continuous reactor comprises a means wherein the reactants are introduced and-products are withdrawn simultaneously. The continuous reactor may be a tank, a tubular structure, a tower or some other like structure, the overall design not being essential. A semi-continuous reactor comprises a means wherein some of the reactants are charged at the beginning and the remaining are fed continuously as the reaction progresses. The product may optionally be simultaneously be withdrawn from the semi-continuous reactor. A batch reactor comprises a means wherein all the reactants are added at the beginning and processing is carried out according to a predetermined course of reaction during which no reactant is fed into or removed from the reactor. Typically, a batch reactor will be a tank with or without agitation means.

In the instant invention, the reaction is carried out in the continuous presence of oxygen. The oxygen, when added in controlled amounts during the course of the reaction, provides a means for controlling the rate of the reaction and for enhancing the selectivity of addition.

The oxygen is added into the reaction mixture by bubbling it into either one of the reactants or by bubbling it into the reaction mixture. Subsurface addition of oxygen into the reaction mixture on a continuous basis allows for quicker equilibration of its solution concentration. In other words, it is the solution concentration of the oxygen relative to the platinum that is important. Contacting the oxygen on the surface of the liquid, such as by blowing it into the vapor space of the reactor or by purging the reactor system with oxygen, will not be as efficient.

The amount of oxygen which must be added will be dependent on the operating conditions, the reactants and the amount of catalyst present. It is preferred to introduce the oxygen combined with an inert gas at an oxygen level of from 1 part per million to 90 weight percent, more preferably 1 to 5 weight percent. The inert gas which the oxygen is combined with may be selected from any inert gas such as nitrogen, argon and others.

The amount of oxygen is important to the rate of the reaction. If too much oxygen is added then the reaction may proceed slowly or not at all. Also, the presence of too much oxygen may result in the formation of undesirable by-products and oxidation products. Further, the presence of too much oxygen may create unsafe operating conditions because of explosive conditions that result with certain silicon hydrides in the presence of too much oxygen. If too little oxygen is added, then again the rate of the reaction will be slow, the reaction may not proceed at all or the catalyst may deactivate before the reaction has gone to completion. One skilled in the art will be able to determine the optimum amount of oxygen necessary to provide the desired operating conditions and product distribution.

So that those skilled in the art can understand and appreciate the invention taught herein, the following examples are presented, it being understood that these examples should not be used to limit the scope of this invention found in the claims attached hereto.

### EXPERIMENTAL PROCEDURE: EXAMPLES 1-8

Examples 1-8 were carried out in a 250 mL, three-necked round bottomed flask equipped with a thermometer, a thermowatch set at 53°C., a reflux condenser surmounted with a dry ice condenser connected to a bubbler, a thermometer adaptor fitted with a 23 cm. long disposable pipet for subsurface addition of the reagent gas, a heating mantle and a stirbar. The reagent gas (flowrate range of 5 to 30 mL/Min.) was passed through a 25,4 cm (10") long tube packed with dry Drierite® (CaSO₄) drying agent before being added. The experiments used 150 ± 1 gram of a 1:1 molar premix of cyclohexene and methyldichlorosilane wherein 150 grams of premix contained 87.5 grams of methyldichlorosilane and 62.5 grams of cyclohexene (0.76 moles each). The reaction was catalyzed using either 191 microliters of 10% by weight solution of chloroplatinic acid in isopropanol or 134 microliters of platinum #2 (a platinum complex with 1,2-divinyl-1,1,2,2-tetramethyldisiloxane 4.22 weight percent platinum) unless otherwise noted.

The reactants were combined in the 250 mL flask and sparged with a minimum of 15 minutes of the reagent gas. The reactants were heated rapidly to 53°C., gentle reflux. The starting time of the experiment was when the solution reached 53°C. Subsurface addition of the reagent gas continued throughout the reaction.

Reflux conditions were used for most of the examples because of the resulting ease it afforded in controlling the solution concentration of oxygen. It was found when monitoring the solution concentration of oxygen during the portion of Example 3 which used air as the oxygen source, that at maximum rate the solution concentration of oxygen was below that achieved by subsurface addition of nitrogen when at room temperature. Thus in most of the examples, reflux was used to assist in deoxygenation of the reaction mixtures and an oxygen containing gas was then added to restore the level of oxygen needed for oxygen enhancement.

Reaction progress was monitored by removing the gas inlet thermometer adaptor and sampling with a disposable pipet into a Gas Chromatograph (GC) autosampler vial. Gas chromatographic analysis, within a minute of sampling, provided a GC area percent of product which was used directly for all discussions in this specification.

The gas chromatographic analysis was conducted on a Hewlett Packard 5710 gas chromatograph equipped with a 6 m x 3,2 mm (20' x 1/8") 10% SE30 on Chromosorb® W HP 80/100 mesh column purchased from Supelco Co. The gas chromatograph was operated isothermally at 160°C. and a thermal conductivity detector was used. A Hewlett Packard 3380 recording integrator was used for quantification.

### EXAMPLE 1

Purging a mixture of cyclohexene, methyldichlorosilane and 100 ppm chloroplatinic acid with argon then heating to 53°C., gentle reflux conditions at atmospheric pressure for 1023 minutes gave only 2% conversion to the product, cyclohexylmethyldichlorosilane. Introduction of air after 1023 minutes gave complete conversion to product in 120 minutes. Thus, it was found that a component of air was necessary to enhance the desired reaction.

### EXAMPLE 2

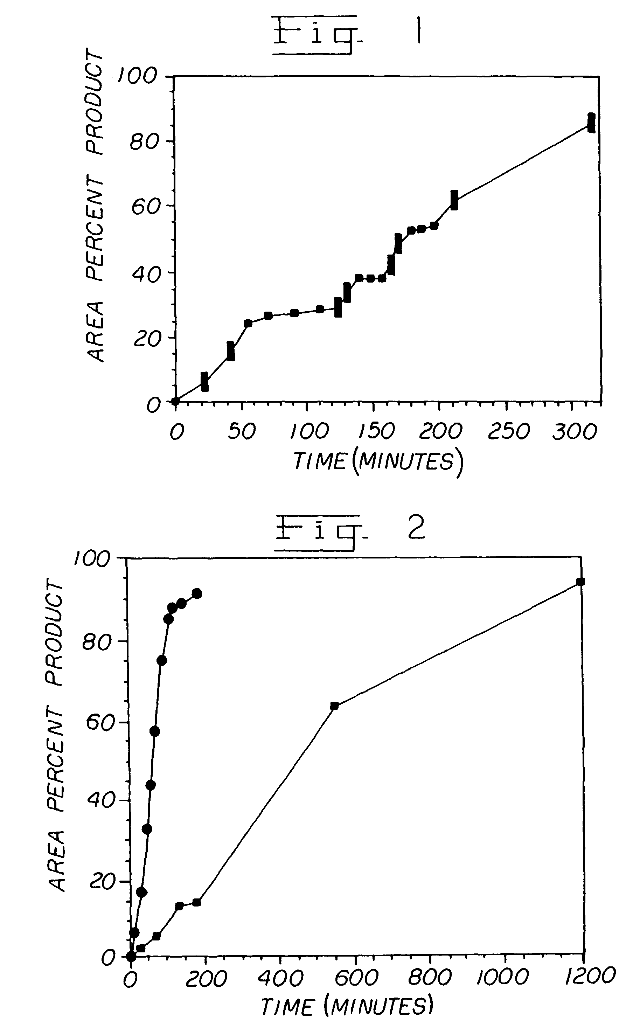

The experiment in Example 1 was repeated, alternating between the subsurface addition of air and argon. It is evident that the hydrosilylation rate can be switched on and off by the choice of atmosphere as shown in Figure 1 wherein ---■---■---■--- is the period during which argon was added to the reaction mixture and 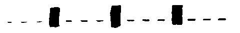 is the period that air was added to the reaction mixture. The three flat regions indicated by ---■---■---■--- correspond exactly with the switch to argon. The effect can also be followed visually with the solution being a dark golden color during the active period and clear, light yellow during the active time. Thus, oxygen was involved in the catalytic cycle yet no products incorporating oxygen were observed. A similar experiment conducted with platinum #2 concentrate as the catalyst source led to similar results. Also, the irreversible formation of a platinum colloid was not responsible for the yellow color associated with a hydrosilylation, since switching between clear and golden (yellow) was done simply by choice of atmosphere. It is theorized that the catalyst is responsible for the golden color.

### EXAMPLE 3

In this example the effect of solution concentration of oxygen was examined. The hydrosilylation rate was determined with the subsurface addition of 2% O₂ in N₂. For comparison purposes a plot of the area percent of product versus time is shown in Figure 2, for experiments which used either air or 2% O₂ in N₂ wherein ---•---•--- is common plant air and ---■---■---■--- is 2% O₂/98% N₂. There was a vast difference in rate showing that there is an optimum oxygen solution concentration necessary for maximum rate.

### EXAMPLE 4

Since subsurface addition of air greatly enhanced the rate of hydrosilylation, the experiment in Example 3 was repeated with pure dried oxygen. After 60 minutes, only 6% starting material had been converted to product. The solution remained colorless. Switching from the subsurface addition of oxygen to the subsurface addition of air allowed the reaction to proceed to completion but at a reduced rate. Repeating the experiment with 270 minutes of subsurface addition of pure dried oxygen gave an even slower hydrosilylation rate once air was introduced, 40% conversion after 24 hours. Several unexpected products were formed. The most notable were 10 area% methyltrichlorosilane along with smaller amounts of cyclohexyl chloride, several low molecular weight siloxanes and polysilanes.

### EXAMPLE 5

In this example, the catalyst level was decreased to look at the effect of the ratio of oxygen to platinum in solution. At 50 ppm chloroplatinic acid, one half the concentration of other experiments and using subsurface addition of air as an oxygen enhancer, the rate was slower. After 5 hours at 53°C., only 43% conversion had taken place and the solution was starting to turn colorless from the earlier observed golden color. Upon further heating, products formed, as observed when pure oxygen was used with 100 ppm chloroplatinic acid (see example 4). The hydrosilylation rate also decreased. After 1400 minutes, only 66% conversion was observed. Thus, the solution concentration ratio of platinum to oxygen is critical for maximum hydrosilylation rate.

### EXAMPLE 6

This experiment was performed to see if oxygen was necessary for hydrosilylation of a 1-alkene. When a 1:1 molar ratio solution of methyldichlorosilane and 1-hexene with 100 ppm chloroplatinic acid was degassed at 0°C. by purging with argon and then allowed to warm, hydrosilylation proceeded with sufficient vigor that the volatile contents removed themselves from the apparatus. This finding was not totally unexpected since even with extended argon purging of a methyldichlorosilane and cyclohexene solution, using chloroplatinic acid as the catalyst. 2% conversion was observed upon heating to reflux. After reflux further deoxygenated the solution, no more hydrosilylation took place even after an extended period of reflux time. With 1-hexene, which was expected to undergo hydrosilylation at a faster rate than cyclohexene, however, the initial hydrosilylation rate was vigorous.

### EXAMPLE 7

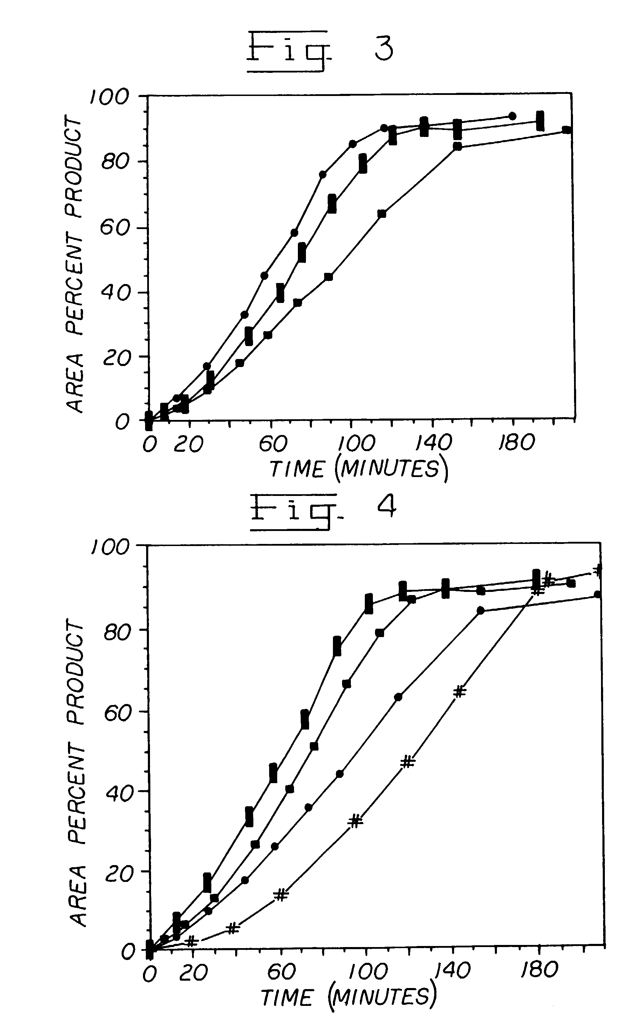

This experiment compared the rate of reaction when adding air subsurface to that when adding zero air subsurface. The purpose was to show unequivocally which of the many components of air was effecting the hydrosilylation. Zero air is a blend of pure oxygen and pure nitrogen at the same proportions as air. As shown in Figure 3 wherein ---•---•---•--- is plant air, 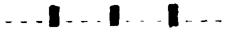 is plant air repeated and ---■---■---■--- is pure air, there were slight differences in rate but the differences were insignificant once one takes into account the inconsistent way in which the reagent gas was introduced into the solutions (flow rate range 5 to 30 mL/min). Since it was shown that hydrosilylation does not proceed at a significant rate when an inert gas such as argon or nitrogen was used, the fact that zero air accelerates the rate proves that oxygen is responsible for the rate enhancement.

### EXAMPLE 8

The effect of light upon the rate of hydrosilylation was investigated. A European patent application 0278863 to Takamizawa et al. suggests that greatly enhanced rates will be achieved. When the experimental apparatus, constructed of pyrex glass, was irradiated with a 275 watt Norelco sunlamp placed 2.5 inches from the pyrex, no enhancement of rate was observed during the subsurface addition of air which is shown in Figure 4 wherein 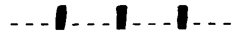 is added air, ---■---■---■--- is air added in repeat, ---•---•---•--- is air added repeat and ---#---#---#--- is air and light. The observed slower rate during photolysis can be explained by the light heating the apparatus and lowering oxygen solubility. Irradiation of an argon degassed mixture of cyclohexene, methyldichlorosilane and chloroplatinic acid held at 53°C, gave 1.5% product after 994 minutes. This is comparable to the 2% conversion observed after 1023 minutes during thermal conditions as set forth in Example 1. Turning off the light and introducing air subsurface gave >90% conversion in 100 minutes. Thus, light does not enhance the rate of hydrosilylation.

### EXPERIMENTAL PROCEDURE: EXAMPLES 9-14

Examples 9-11 and 15-17 were carried out in a 100mL four-necked round bottomed flask equipped with a thermometer, a thermowatch set at a point to maintain gentle reflux of the starting materials, reflux condenser surmounted by a dry ice condenser connected to a bubbler gas exit, thermometer adaptor fitted with a 15 cm long disposable pipet for the subsurface addition of a gas (at 9 mL/min. unless otherwise noted), a heating mantle and a magnetic stirring bar at 1" in length. The reagent gas was passed through a 8" long tube packed with dry Drierite (CaSO₄) drying agent before being introduced into the reactants.

A 10% by weight solution of chloroplatinic acid (H₂PtCl₆^{.}6H₂O , FW 517.93) in isopropanol (density 0.785 g/mL) was used as catalyst source. All experiments used the same molar ratio of catalyst as discussed above. All reactants and solvents were charged to the flask and heated to gentle reflux before the addition of catalyst. The starting time of the experiment was when the catalyst was added.

Reaction progress was monitored by removing a stopper from the fourth neck of the flask and sampling with a disposable pipet into a gas chromatograph autosampler vial. Gas chromatographic analysis, within a few seconds after sampling, provided an area percent of product which was used directly for all discussions in this specification unless otherwise noted.

The gas chromatographic analysis was conducted on a Hewlett Packard 5890 gas chromatograph equipped with a 15 meter x 0.25 mm ID, Durabond-1 (0.25 micron thickness) column purchased from J&W Scientific Co. The gas chromatograph was operated on a program of 38°C. for 1 min followed by a temperature increase of 15°C./min until a temperature of 300°C. was reached at which point it was held for 5 minutes. A Hewlett Packard 3390 recording integrator was used for quantification.

### EXAMPLE 9

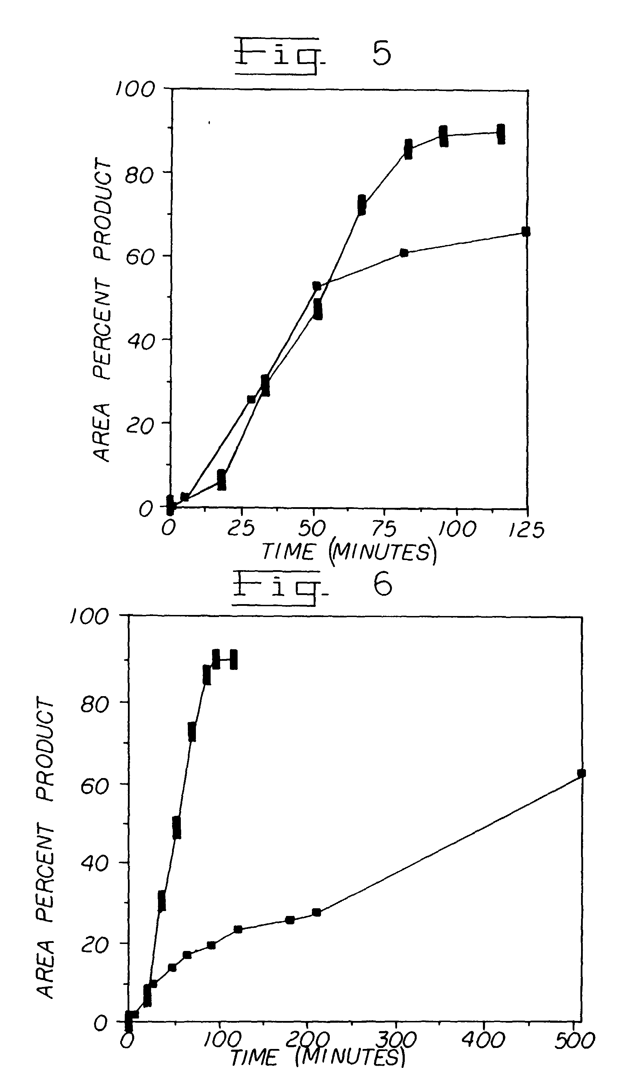

In this example, the effect of diluent upon the reaction rate was checked by using hexane as solvent. The above procedure and apparatus was used along with 17.5g CH₃HSiCl₂ (0.15 mole), 12.5g cyclohexene (0.15 mole), 20g hexane (0.23 mole) and 38 µL of chloroplatinic acid/IPA solution. Air was introduced subsurface at 9 mL/min. The reaction mixture was heated to 58°C. Comparison was made by running the experiment using 35g CH₃HSiCl₂ (0.3 mole), 25g cyclohexene (0.3 mole) and 76 µL of chloroplatinic acid/IPA solution. The effect of diluent upon reaction rate was small. The area percent of product shown in Figure 5 wherein ---■---■---■---- is hexane diluent and 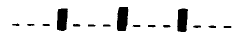 is no diluent, was corrected for the amount of hexane present.

### EXAMPLE 10

The importance of balancing the effects of deoxygenating by refluxing and oxygenating by air introduction is exemplified in this example where simply varying the flow rate of the oxygen source (air) drastically altered the rate of reaction. The above procedure and apparatus was used along with 35g CH₃HSiCl₂ (0.3 mole), 25g cyclohexene (0.3 mole) and 76 µL of chloroplatinic acid/IPA solution. Air was introduced subsurface at 200 mL/min. The reaction mixture was heated to 50°C. Comparison was made by running the experiment using 35g CH₃HSiCl₂ (0.3 mole), 25g cyclohexene (0.3 mole) and 76 µL of chloroplatinic acid/IPA solution and air added subsurface at 9 mL/min at 53°C. The effect of the rate of air addition is shown in Figure 6 wherein ---■---■---■--- is air added at 200 mL/min and 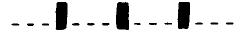 is air added at 9 mL/min. In the case of air introduced at 200 mL/min, over-oxygenation occurred as discussed in Example 4 above.

### EXAMPLE 11

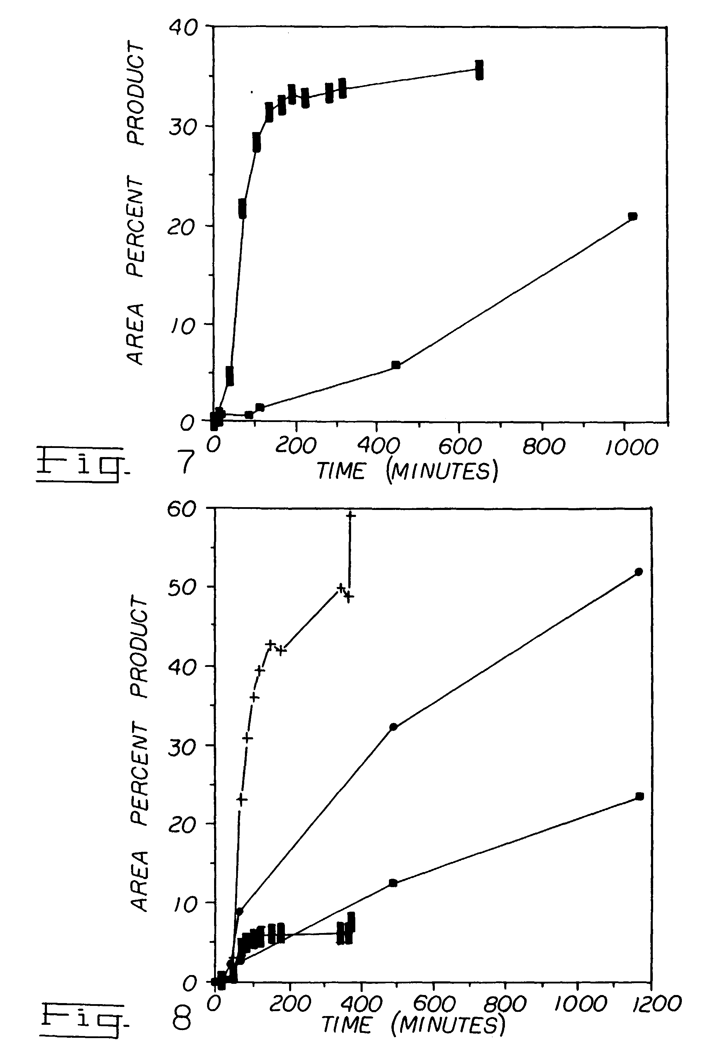

The effect on reaction rate of controlling the amount of oxygen introduced into the reaction mixture is further exemplified by the hydrosilylation of cyclohexene by 1,1,1,2,3,3,3-heptamethyltrisiloxane. The above procedure and apparatus was used along with 33.8g 1,1,1,2,3,3,3-heptamethyltrisiloxane (0.15 mole), 12.5 g cyclohexene (0.15 mole), 20 g hexane and 38 µL of chloroplatinic acid in isopropanol alcohol solution. Air or 2% Oxygen in nitrogen was introduced subsurface at 9 mL/min. The reaction mixture was heated to 82°C. The area percent products plotted in Figure 7 wherein ---■---■---■--- is air and 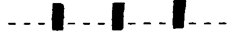 is 2% oxygen in nitrogen, were not corrected for the amount of hexane present since it was identical in both cases. In the case of 2% oxygen, conversion to approximately 30 area percent product occurred, the reaction mixture was no longer deoxygenating itself sufficiently via reflux and the reaction rate slowed. In the case of air, the reaction rate was slow throughout due to the introduction of too much oxygen.

### EXAMPLE 12

The rate of the hydrosilylation of 1-hexene with methyldimethoxysilane is increased by oxygen enhancement. The above procedure and apparatus were used with CH₃HSi(OCH₃)₂ (15.93g. 0.15 mol), 1-hexene (12.62g. 0.15 mol) and hexane (20g, 0.23 mol). The flask was purged with nitrogen at 9 mL/min. The solution was heated to reflux at 63°C. before addition of 38 µL of 10% by weight of H₂PtCl₆^{.}6H₂O in IPA was injected into the boiling solution via a syringe. As soon as the chloroplatinic acid had been added, a sample was drawn for GC analysis which indicated that 0.5 area% of CH₃(Hexyl)Si(OCH₃)₂ formed. The reaction mixture was periodically analyzed by GC. After 24 hours under nitrogen, GC analysis showed less than 5 area % of hydrosilylated product was formed. At this time, air was introduced into the solution at 9 mL/min. After 16 hrs., GC analysis indicated that hydrosilylation went to completion and no CH₃HSi(OCH₃)₂ was left over.

### EXAMPLE 13

The rate of the hydrosilylation of 1-hexene with 1,1,1,2,3,3,3-heptamethyltrisiloxane is increased by oxygen enhancement. Hydrosilylation of 1-hexene was carried out using an equimolar ratio of 1-hexene/SiH in hexane at reflux. The solution was loaded into the flask and heated to reflux with nitrogen added subsurface before injecting the chloroplatinic acid/IPA catalyst solution. Samples were periodically drawn for GC analysis to follow the formation of the adduct. Several seconds after the catalyst was added, GC analysis showed the presence of only a trace amount of product. After three minutes, this amount had increased to 10% by area. It was found that in 14 minutes the clear solution had turned to dark brown color and the hydrosilylation reaction had gone to completion showing a 49.2 area% result. When the hydrosilylation of 1-hexene with 1,1,1,2,3,3,3-heptamethyltrisiloxane was performed under same conditions as above but under air, hydrosilylation to completion took place exothermically as soon as the chloroplatinic acid was injected into the solution of 1,1,1,2,3,3,3-heptamethyltrisiloxane/1-hexene/hexane at reflux. The clear color of the solution turned to dark brown color and the reaction was complete (51.9% by area) within seconds.

### EXAMPLE 14

During the hydrosilylation of an internal olefin such as trans-2-hexene several adducts are possible. In addition to those possible by simple addition of the Si-H across the olefinic bond the products of migration of the olefinic double bond followed by addition of Si-H across the migrated bond are possible. Thus, in the case where one starts with an internal double bond, the predominate product is the same as if one had started with the terminal olefin. Such is the case with the following examples which use trans-2-hexene as starting material. The rate of the hydrosilylation of trans-2-hexene with 1,1,1,2,3,3,3-heptamethyltrisiloxane is increased by oxygen enhancement. It should be noted that the inventors herein have discovered that they can control the relative rates of double bond migration along the carbon backbone rather than the rate of hydrosilylation. Thus, the ratio of terminal adduct to internal adduct is affected by the use of oxygen enhancement. Hydrosilylation of trans-2-hexene was carried out using an equimolar ratio of hexene/SiH in hexane at reflux. It was found that when the hydrosilylation was conducted with a nitrogen purge, it went to completion in 21 hours while the same experiment with an air purge was complete in less than 6 hours. When the hydrosilylation was performed in the presence of the nitrogen purge, the hydrosilylated products were 69% terminal adduct with 31% internal adduct (mixture of 2- and 3-) but when hydrosilylation was performed in the presence of air, under the same conditions, the hydrosilylation formed 88% terminal adduct and 12% internal adduct all of which is illustrated in Figure 8 wherein ---■---■--- is nitrogen purge, internal adducts, 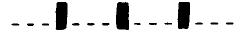 is air purge, internal adduct, ---•---•---•--- is nitrogen purge, terminal adduct and 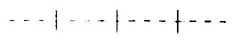 is air purge, terminal adduct.

### EXAMPLE 15

The rate of the hydrosilylation of trans-2-hexene with triethylsilane is increased by oxygen enhancement. In experiments using 87 ppm Pt by weight to the total reactants and introducing either 2% oxygen in argon or pure argon, rate enhancements are exemplified in Table I. Reactants were in a 1:1 molar ratio and maintained at 65°C. throughout. The area percent product listed in Table I is a combination of isomers.

**TABLE I**

| Reaction of Trans-2-hexene with Triethylsilane | | |
|---|---|---|
| Atmosphere | Area Percent Product | |
| | 6 hrs. | 24 hrs. |
| Argon | 3.1 | 9.8 |
| 2% O₂/Argon | 4.7 | 16.0 |

### EXAMPLE 16

The rate of hydrosilylation of trans-2-hexene by triethoxysilane is increased by oxygen enhancement. In experiments using 87 ppm Pt by weight to the total reactants and introducing either 2% oxygen in argon or pure argon, rate enhancements are exemplified in the table below. Reactants were in a 1:1 molar ratio and maintained at 65°C. throughout. The area percent product listed in Table II is a combination of isomers.

**TABLE II**

| Reaction of Trans-2-hexene with Triethoxysilane | | |
|---|---|---|
| Atmosphere | Area Percent Product | |
| | 7 hrs. | 24 hrs. |
| Argon | Trace | Trace |
| 2 % O₂/Argon | 29.6 | 45.4 |

### EXAMPLE 17

The rate of hydrosilylation of trans-2-hexene by phenyldimethylsilane is increased by oxygen enhancement. In experiments using 87 ppm Pt by weight to the total reactants and introducing either 2% oxygen in argon or pure argon, rate enhancements are exmplified in Table III. Reactants were in a 1:1 molar ratio and maintained at 65°C. throughout. The area percent product listed in Table III is a combination of isomers.

**TABLE III**

| Reaction of Trans-2 hexene with Phenyldimethylsilane | |
|---|---|
| Atmosphere | Area Percent Product @ 24 hrs. |
| Argon | 0.4 |
| 2% O₂/Argon | 6.4 |

### EXAMPLE 18

The rate of the hydrosilylation of 1-hexene with triethylsilane is increased by oxygen enhancement. Hydrosilylation of 1-hexene was carried out using an equimolar ratio of 1-hexene/SiH in hexane at reflux. The solution was loaded into the flask and heated to reflux before injecting the chloroplatinic acid/IPA catalyst solution. Samples were periodically drawn for GC analysis to follow the formation of the adduct. When a nitrogen purge was used, hydrosilylation took place slowly with less than 12 area percent of adduct formed in 24 hr. But when an air purge was used, hydrosilylation went to near completion in 26 hr. forming 25 area% adduct. In addition, with air purge, 5 area percent of Et₃SiOSiEt₃ formed. No Et₃SiOSiEt₃ formed when the hydrosilylation was performed using nitrogen.

### EXAMPLE 19

The use of high percentage oxygen containing gases such as air to oxygenate certain silanes can be hazardous. The hazards can be avoided by the use of low percentage oxygen containing gases such as 2% oxygen in nitrogen. However, as pointed out in example 2, hydrosilylation of cyclohexene by methyldichlorosilane, using 2% oxygen in nitrogen at atmospheric pressure drastically reduced the rate as compared to using air as an oxygen source. This can be compensated for by increasing temperature and optimizing 2% oxygen in nitrogen pressure to obtain the correct amount of oxygen in solution for maximum rate. The hydrosilylation rate at 53°C. and atmospheric pressure was compared to the rate at 110°C. and 80 psig. The rate data is shown in Figure 9 wherein ---■---■--- is 2% O₂, 0 psig and 53°C. and ---•---•--- is 2% O₂, 80 psig and 110°C., respectively. The elevated temperature experiment was carried out in a stirred Parr reactor with subsurface addition of 2% oxygen in nitrogen at 1 cm³/sec to 400 grams of 1:1 molar ratio mixture of cyclohexene and methyldichlorosilane containing 100 ppm chloroplatinic acid. It is obvious from the data that 2% oxygen in nitrogen pressure provided the correct concentration of oxygen in solution to give the optimum performance of the platinum catalyst.

### EXAMPLE 20

The rate of hydrosilylation of 1,5-hexadiene by trichlorosilane was increased by oxygen enhancement. A 500 mL three-necked flask was equipped with a thermometer, magnetic stirrer bar, a pressure equalizing addition funnel connected to a gas source, a heating mantle and 19" water cooled condenser connected to a bubbler as a gas exit. To the flask was added 124 g of 1,5-hexadiene (1.51 mol) and 5 g of 1% platinum on carbon. No heat was applied to the flask until after the hydrosilylation had gone to completion as determined by GC analysis. The addition of 75.3 g of trichlorosilane (0.555 mol) to the 1,5-hexadiene was completed over a 60 minute period with stirring. During the addition the temperature increased to 50°C. when the hydrosilylation was carried out under air. GC analysis immediately after the addition was completed showed that the hydrosilylation had gone to completion as indicated by the complete absence of trichlorosilane. Excess 1,5 hexadiene was removed followed by the product, 5-hexenyltrichlorosilane having a boiling point of 56°C. at 2 to 3 Torr, 114.7 g and 95% yield, by distillation.

The experiment was repeated exactly as described above with the exception that the addition of trichlorosilane to 1,5-hexadiene was conducted under nitrogen. During the trichlorosilane addition, the temperature increased to 35°C. After the 60 minute addition period, the reaction mixture was allowed to stir for an additional 150 minutes before a sample was withdrawn for GC analysis. GC analysis indicated the hydrosilylation had not gone to completion since 30% of the trichlorosilane remained unreacted. At this time the nitrogen head space purge was switched to air. Within two minutes after the system was switched to air the temperature rose to 50°C. GC analysis of the reaction mixture indicated the hydrosilylation had gone to completion as shown by the complete absence of trichlorosilane. Excess 1,5 hexadiene was removed followed by the product, 5-hexenyltrichlorosilane which had a boiling point of 56°C. at 2-3 Torr, 114.7 g, 95% yield, obtained by distillation.

### EXAMPLE 21

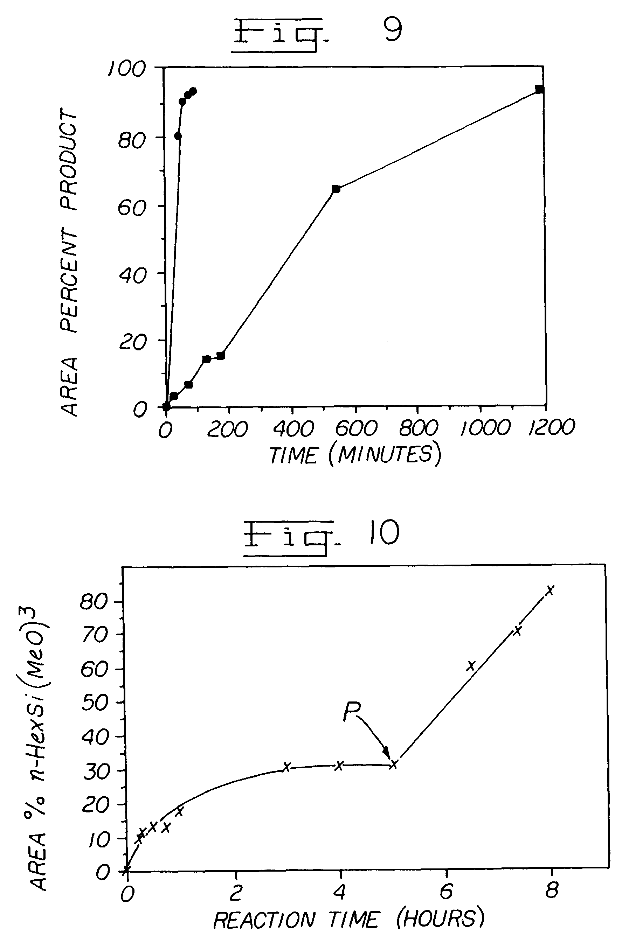

The rate of hydorsilylation of 1-hexene by trimethoxysilane was increased by oxygen enhancement. A 50 mL three-necked flask was equipped with a septum, condenser, magnetic stirring bar and a heating mantle. The top of the condenser was fitted with a tee allowing the reaction mixture to be kept under the gas of choice. The flask was loaded with 12.2 g of trimethoxysilane (0.0998 mole), 8.39 g of 1-hexene (0.0998 mole) and 5.3 mg of chloroplatinic acid hexahydrate (1 x 10⁻⁵ mol). The contents of the flask were heated to 50°C. under argon. Reaction progress was followed by GC analysis of aliquots withdrawn from the mixture. After 180 minutes, the hydrosilylation had gone to 30% completion. After 300 minutes, the hydrosilylation was still only 30% complete. The rate was restored by placing the flask under an air atmosphere. The rate data is shown in Figure 10 wherein at point P, air was introduced to the reaction.

## Claims

1. A method of controlling hydrosilylation in a reaction mixture comprising
(A) a silicon hydride selected from silicon hydrides
having the general formulae:
(i) RₓSiH₄₋ₓ,
(ii) R_{y}HᵤSiCl_{4-y-u},
(iii) R_{z}(R'O)_{4-z-w}SiH_{w}
and, 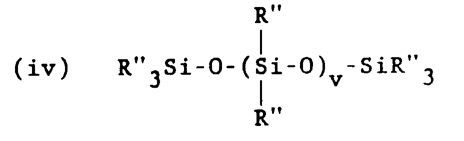 wherein each R is independently selected from the group consisting of substituted and unsubstituted alkyl groups of 1 to 30 carbon atoms and substituted and unsubstituted aryl groups of 6 to 16 carbon atoms; each R' is independently selected from alkyl groups of 1 to 6 carbon atoms; R" is independently selected from the group consisting of R and the hydrogen atom, with the proviso that: at least one R" in each molecule is a hydrogen atom; u has a value of 1, 2 or 3 with the proviso that u+y≤3; v has a value of zero or an integer of 1 or greater; w has a value of 1 to 3; x has the value of 1 to 3; y has a value of 0 to 2; and z has a value of 0 to 2 with the proviso that w+z≤3, with
(B) unsaturated compounds selected from the group consisting of
(i) substituted or unsubstituted unsaturated organic compounds or mixtures thereof,
(ii) substituted or unsubstituted unsaturated silicon compounds or mixtures thereof and,
(iii) mixtures of (i) and (ii); in the presence of a catalyst selected from the group consisting of
(a) platinum metal on a support,
(b) platinum compounds and,
(c) platinum complexes,
by controlling the solution concentration of oxygen relative to any platinum in said reaction mixture by a subsurface addition of oxygen, wherein the oxygen is introduced in an inert gas stream such that the reaction is carried out in the continuous presence of oxygen.

2. A method as claimed in claim 1 wherein there is also present a solvent.

3. A method as claimed in claim 1 or 2 wherein the unsaturated compound (B) is a linear or branched alkyl compound having an internal unsaturation.

## Patentansprüche

1. Verfahren zur Kontrolle der Hydrosilylierung in einer Reaktionsmischung, die
(A) ein Siliciumhydrid ausgewählt aus Siliciumhydriden mit der allgemeinen Formel
(i) RₓSiH₄₋ₓ,
(ii) R_{y}HᵤSiCl_{4-y-u},
(iii) R_{z}(R'O)_{4-z-w}SiH_{w}
und 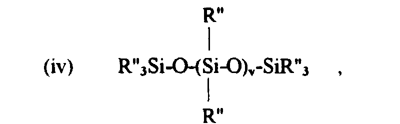 worin jeder Rest R unabhängig ausgewählt ist aus der Gruppe bestehend aus substituierten und unsubstituierten Alkylgruppen mit 1 bis 30 Kohlenstoffatomen und substituierten und unsubstituierten Arylgruppen mit 6 bis 16 Kohlenstoffatomen; jeder Rest R' unabhängig ausgewählt ist aus Alkylgruppen mit 1 bis 6 Kohlenstoffatomen; R" unabhängig ausgewählt ist aus der Gruppe bestehend aus R und dem Wasserstoffatom mit dem Vorbehalt, daß mindestens einer der Reste R" in jedem Molekül ein Wasserstoffatom ist; u einen Wert von 1, 2 oder 3 hat, mit dem Vorbehalt, daß u+y≤3; v einen Wert von 0 hat oder eine ganze Zahl von 1 oder mehr ist; w einen Wert von 1 bis 3 hat; x den Wert 1 bis 3 hat; y einen Wert von 0 bis 2 hat und z einen Wert von 0 bis 2 hat, mit dem Vorbehalt, daß w+z≤3, und
(B) ungesättigte Verbindungen ausgewählt aus der Gruppe bestehend aus
(i) substituierten oder unsubstituierten ungesättigten organischen Verbindungen oder Mischungen davon,
(ii) substituierten oder unsubstituierten ungesättigten Siliciumverbindungen oder Mischungen davon. und
(iii) Mischungen von (i) und (ii);
in Gegenwart eines Katalysators ausgewählt aus der Gruppe bestehend aus
(a) Platinmetall auf einem Träger,
(b) Platinverbindungen,
(c) Platinkomplexen
umfaßt, indem die Konzentration von Sauerstoff in der Lösung bezogen auf Platin in der Reaktionsmischung kontrolliert wird durch eine Zugabe von Sauerstoff unterhalb der Oberfläche, wobei Sauerstoff in einem Inertgasstrom so eingeleitet wird, daß die Reaktion bei kontinuierlicher Gegenwart von Sauerstoff durchgeführt wird.

2. Verfahren nach Anspruch 1, worin auch ein Lösungsmittel vorhanden ist.

3. Verfahren nach Anspruch 1 oder Anspruch 2, worin die ungesättigte Verbindung (B) eine lineare oder verzweigte Alkylverbindung mit innenliegender ungesättigter Bindung ist.

## Revendications

1. Un procédé pour régler l'hydrosilylation dans un mélange réactionnel comprenant
(A) un hydrure de silicium choisi parmi les hydrures de silicium répondant aux formules générales
(i) RₓSiH₄₋ₓ,
(ii) R_{y}HᵤSiCl_{4-y-u},
(iii) R_{z}(R'O)_{4-z-w}SiH_{w}
et, 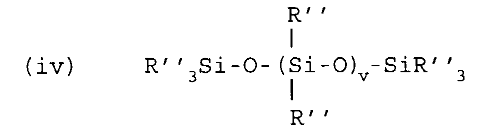 dans lesquelles chaque R est indépendamment choisi dans le groupe constitué des groupes alkyles substitués et non-substitués de 1 à 30 atomes de carbone et des groupes aryles substitués et non-substitués de 6 à 16 atomes de carbone ; chaque R' est indépendamment choisi parmi des groupes alkyles de 1 à 6 atomes de carbone ; R" est indépendamment choisi dans le groupe constitué de R et de l'atome d'hydrogène, à la condition qu'au moins un R" dans chaque molécule soit un atome d'hydrogène ; u vaut 1, 2 ou 3 à la condition que u+y soit inférieur ou égal à 3 ; v vaut zéro ou est un nombre entier valant 1 ou plus ; w vaut 1 à 3 ; x vaut 1 à 3 ; y vaut 0 à 2 ; et z vaut 0 à 2 à la condition que w+z soit inférieur ou égal à 3, avec
(B) des composés insaturés choisis dans le groupe constitué
(i) des composés organiques insaturés, substitués ou non-substitués, ou de mélanges de ceux-ci,
(ii) des composés du silicium insaturés, substitués ou non-substitués, ou de mélanges de ceux-ci et,
(iii) des mélanges de (i) et (ii) ; en présence d'un catalyseur choisi dans le groupe constitué
(a) du platine métallique sur un support
(b) des composés du platine et,
(c) des complexes du platine,
en ajustant la concentration d'oxygène en solution par rapport à tout platine présent dans ledit mélange réactionnel par une addition en dessous de la surface d'oxygène, l'oxygène étant introduit dans un flux de gaz inerte de telle sorte que la réaction soit conduite en présence continue d'oxygène.

2. Un procédé selon la revendication 1 dans lequel il y a aussi un solvant présent.

3. Un procédé selon la revendication 1 ou 2 dans lequel le composé insaturé (B) est un composé alkylé linéaire ou ramifié comportant une insaturation interne.
